# EUROPÄISCHE PATENTSCHRIFT

(11) **EP 1 870 280 B1**
(45) Veröffentlichungstag und Bekanntmachung des Hinweises auf die Patenterteilung: **10.03.2010**
(21) Anmeldenummer: 07009002.2
(22) Anmeldetag: 04.05.2007
(51) Int. Cl.: B60P 3/22, B65D 88/10, B65D 90/02

(54) **Tank**
Tank
Réservoir

(30) Priorität: 14.06.2006 AT 10132006
(43) Veröffentlichungstag der Anmeldung: 26.12.2007
(73) Patentinhaber: Heson Metall- und Kunststofftechnik GmbH, 4655 Vorchdorf (AT)
(72) Erfinder: Axmann, Norbert, 4050 Traun (AT)
(74) Vertreter: Hofinger, Stephan

(56) Entgegenhaltungen:
- DE-A1- 3 245 968
- US-A- 2 269 617
- US-A- 4 155 207
- US-A- 5 320 247
- US-A- 5 820 718

## Beschreibung

Die Erfindung betrifft einen Tank, dessen Mantelfläche zumindest teilweise aus ebenen Flächen gebildet ist, welche mit Versteifungsrippen versehen sind, die paarweise zu einem Profil mit V-förmiger Querschnittsfläche zusammengefasst und miteinander verbunden sind, wobei die freien Enden der Schenkel der V-förmigen Querschnittsfläche an der umhüllenden Wand des Tanks anliegen und mit dieser verbunden sind.

Vor allem um den zum Einbau zur. Verfügung stehenden Raum gut auszunutzen werden Tanks mit ebenen Deck- und Seitenflächen ausgeführt, beispielsweise als Quader. In Folge des Druckes der im Tank gelagerten Flüssigkeit neigen dabei die Seitenwände zum Ausbauchen. Um das zu verhindern, werden die Seitenwände in den besonders beanspruchten Zonen lokal verstärkt, um die Biegesteifigkeit in diesen Zonen zu erhöhen.

Bei einer bekannten Bauart werden die Seitenwände eines Tanks mit einer oder mehreren Sicken versehen, welche von außen gesehen jeweils die Form einer Nut mit trapezförmiger Querschnittsfläche haben, welche in einer horizontalen Ebene in der Mantelfläche des Tanks umläuft. Diese Sicken werden üblicherweise durch Tiefziehen hergestellt. Nachteile dieses Verfahrens liegen darin, dass diese Sicken nur bei relativ dünnwandigen Tanks einfach hergestellt werden können, dass durch das Volumen dieser Sicken das Fassungsvermögen des Tanks verringert wird und dass sie auch optisch eher stören.

Bei einer weiteren bekannten Bauart sind an der Innenseite der Mantelfläche des Tanks umlaufend Profile mit flacher U-Querschnittsform fest geschweißt. Auch diese Profile selbst werden üblicherweise aus dem gleichen Kunststoff-Flachmaterial zusammengeschweißt, aus welchem die Tankwände bestehen. Um den Raumverlust gering zu halten, sind die Profilwände mit Bohrungen versehen. Nachteilig an dieser Bauweise ist der große Herstellungsaufwand.

Bei einer dritten bekannten Bauart werden an der Innenseite der Mantelfläche glasfaserverstärkte Kunststoffprofile mit rechteckförmiger Querschnittsfläche angeordnet. Aufgrund der hohen Längssteifigkeit dieser Profile erzielt man dabei mit relativ kleinen Querschnittsflächen schon eine gute Versteifung des Tanks. Nachteilig an dieser Methode sind die hohen Kosten für die glasfaserverstärkten Kunststoffprofile.

Bei allen diesen Bauweisen besteht der Nachteil, dass die Versteifungswirkung gegen Verwindung des Tanks gering ist.

Aus der US 2,269,617 ist ein Tank mit einer Rundform bekannt geworden, an dessen Innenseite Verstärkungsprofile mit einem im Wesentlichen V-förmigen Querschnitt angeordnet sind.

Aus der US 5,320,247 ist ein runder Tank mit vertikal verlaufenden und trapezförmigen Versteifungsprofilen bekannt geworden, die Durchlassöffnungen aufweisen, welche dazu dienen, bei geringen Füllstand Flüssigkeitsansammlungen an Tankbotten zu verhindern.

Der Erfinder hat sich die Aufgabe gestellt, eine Versteifung für die Seitenflächen von Kunststofftanks zu schaffen, welche gegenüber den bekannten Bauweisen bei gleicher Verbesserung der Biegesteifigkeit der Tankwände die Verwindungssteifigkeit mehr verbessert und kostengünstiger herstellbar ist sowie bei welcher das von den Versteifungsrippen eingeschlossene Volumen für das Fassungsvermögen des Tanks nicht verloren geht.

Die erfindungsgemäße Aufgabe wird durch die Merkmale des Anspruchs 1gelöst.

Die Erfindung ist anhand von Zeichnungen veranschaulicht:
- Fig. 1: zeigt etwas stilisiert einen erfindungsgemäßen, im Wesentlichen aus ebenen Kunststoffplatten gebildeten, quaderförmigen Tank in einer vertikalen Schnittansicht,
- Fig. 2: zeigt in einer perspektivischen Ansicht Versteifungsrippen für den Tank gemäß Fig. 1 in einem frühen Stadium eines vorteilhaften Herstellungsverfahrens aus einem ebenen Materialstreifen,
- Fig. 3: zeigt in einer perspektivischen Ansicht die Versteifungsrippen von Fig. 2 in einem gegenüber Fig. 2 späteren Herstellungsstadium.

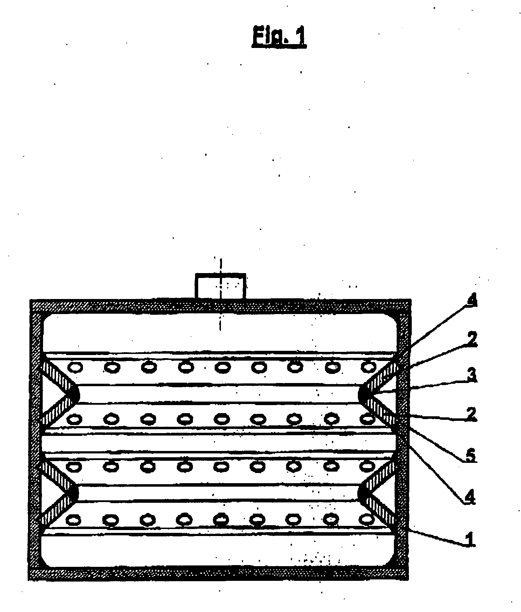

Entsprechend Fig. 1 werden die Mantelflächen 1 eines Kunststofftanks an ihrer Innenseite mit horizontal umlaufenden Versteifungsrippen 2 versehen, welche selbst aus ebenen Kunststoffstreifen gebildet sind, und jeweils paarweise ein Profil mit V-förmiger Querschnittsfläche bilden, wobei die beiden freien Schenkelenden des Profils an der jeweiligen Mantelfläche 1 des Tanks anliegen. Bei dem in Fig. 1 dargestellten Beispiel sind sowohl die Versteifungsrippen 2 mit der Mantelfläche 1, als auch die Versteifungsrippen 2 paarweise miteinander durch Schweißen verbunden. Als Schweißverfahren eignet sich dabei das Kunststoff-Warmgasschweißen sehr gut. Für die Ecken der Mantelfläche 1 des Tanks ist es am besten, den Stoß der beiden dort aufeinander treffenden, jeweils durch zwei Versteifungsrippen 2 gebildeten Profile in Gehrung auszuführen und zu verschweißen. Damit das zwischen der Mantelfläche 1 und einem Paar von Versteifungsrippen 2 eingeschlossene Volumen für das Fassungsvermögen des Tanks nicht verloren geht, ist die Fläche der Versteifungsrippen 2 an vielen Stellen durchbohrt, sodass der Tankinhaft durchfließen kann.

Die Anordnung der Versteifungsrippen 2 zu Dreiecken hat gegenüber einer Anordnung, bei welcher ein rechteckiges bzw. U-förmiges Profil gebildet wird, mehrere Vorteile: Bei gleichem Materialaufwand reichen die Rippen weiter von der Mantelwand weg, womit die Biegesteifigkeit besser wird. Die Stabilität der Form der Querschnittsfläche ist besser, da keine parallelogrammartige Verschiebung möglich ist, womit die Verwindungssteifigkeit der Gesamtanordnung verbessert wird. Auch die Fertigung des Profils ist kostengünstiger, vor allem deshalb, weil nur zwei Profilflächen miteinander verbunden werden müssen.

Eine weitere Kosteneinsparung bei der Fertigung kann erreicht werden, indem an den Linien auf den Mantelflächen 1, an denen Versteifungsrippen 2 mit einer Längskante anliegen sollen, eine Nut 5 gefräst wird. Dieses Fräsen erfolgt vor dem Zusammenbau der einzelnen Teilflächen zu einer Mantelfläche, da es zu diesem Zeitpunkt noch einfach durchführbar ist. Bei der Montage der Versteifungsrippen 2 an der Mantelfläche 1 werden die Versteifungsrippen mit ihren der Mantelfläche zugewandten Kanten in die jeweils passende Nut 5 gedrückt, womit sie in ihrer Lage eindeutig definiert sind. Durch Ziehen einer Schweißnaht 4 zwischen der noch aus der Nut herausragenden Fläche der Versteifungsrippen und der Mantelfläche wird die Verbindung fixiert.

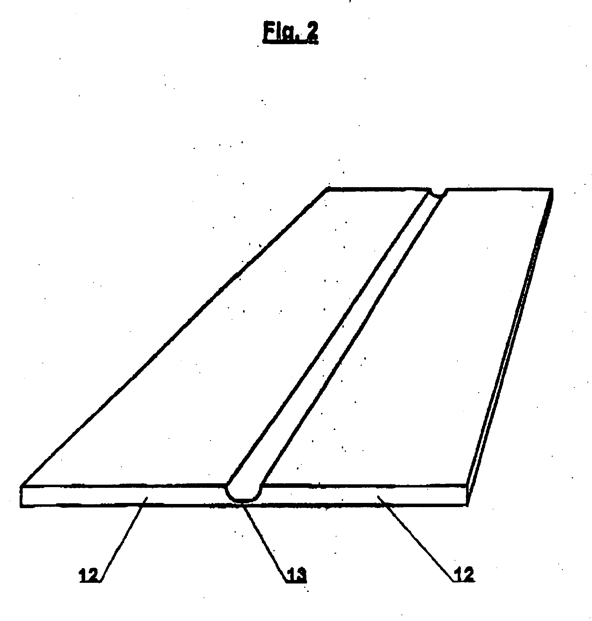

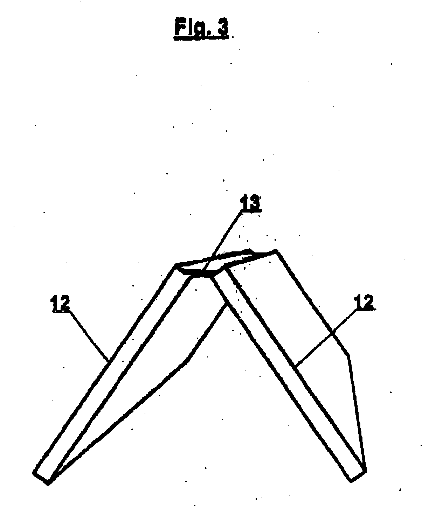

Anstatt zwei Versteifungsrippen 2, welche aus jeweils einem flachen Materialstreifen bestehen, zu einem V-förmigen Profil entsprechend Fig. 1 zu verschweißen, kann man auch aus einem einzigen, ursprünglich ebenen Materialstreifen ein V-förmiges Profil aus zwei miteinander verbundenen Versteifungsrippen 12 bilden, wie in Fig. 2 und Fig. 3 veranschaulicht. Gemäß Fig. 2 wird aus einem rechteckförmigen Materialstreifen, dessen Breite etwas mehr als die doppelte Breite einer Versteifungsrippe ist, eine in Längsrichtung verlaufende Nut mit etwa trogförmiger Querschnittsfläche gebildet, sodass unter dem Nutboden ein Bereich 13 verbleibt, dessen Material gegenüber der ursprünglichen Materialstärke stark verringert ist. Die beidseits der Nut verbleibenden, ungeschwächten Flächenbereiche bilden die Versteifungsrippen 12. Gemäß Fig. 3 wird der so behandelte Materialstreifen im Querschnittsbereich 13 so umgebogen, dass ein V-förmiges Profil gebildet wird. Vorzugsweise liegt beim Biegen die Ausfräsung an der Außenseite. Das Herstellen der Nut kann beispielsweise durch Fräsen oder Pressen unter Wärmeeinwirkung erfolgen.

Ein typisches Material für die Flächen des Tanks und die Versteifungsrippen ist Polyethylen.

Bei Anwendung einer entsprechend großen Menge gleichartiger Versteifungsrippen kann es sinnvoll sein, das V-förmige, durch zwei Versteifungsrippen 2 gebildete Profil durch Extrusion herzustellen. Bei kleineren Mengen ist dieses Herstellverfahren wegen der einmaligen hohen Herstellkosten für das Extrusionswerkzeug nicht wirtschaftlich.

## Patentansprüche

1. Tank, dessen Mantelfläche (1) zumindest teilweise aus ebenen Flächen gebildet ist, welche an ihrer Innenseite mit horizontal verlaufenden Versteifungsrippen (2) versehen sind, wobei die Versteifungsrippen (2) paarweise zu einem Profil mit V-färmiger Querschnittsfläche zusammengefasst und miteinander verbunden sind, wobei die freien Enden der Schenkel der V-förmigen Querschnittsfläche an der umhüllenden Wand des Tanks anliegen und mit dieser verbunden sind, wobei die Flächender Versteifungsrippen (2) eine Vielzahl von Öffnungen aufweisen, die für den Durchtritt des Tankinhalts vorgesehen sind, und wobei die Öffnungen vertikal übereinanderliegend beabstandet sind.

2. Tank nach Anspruch 1, **dadurch gekennzeichnet, dass** die Versteifungsrippen (2) mit der Innenseite der Mantelfläche (1) des Tanks verschweißt sind.

3. Tank nach Anspruch 1 oder 2, **dadurch gekennzeichnet, dass** die an den Ecken der Mantelfläche aufeinanderfolgenden Versteifungsrippen (2) zueinander auf Gehrung stehen und miteinander verschweißt sind.

4. Tank nach einem der Ansprüche 1 bis 3, **dadurch gekennzeichnet, dass** zwei Versteifungsrippen (2) zu einem Profil mit V-förmiger Querschnittsfläche zusammengefügt und durch eine Schweißnaht (3) miteinander verbunden sind.

5. Tank nach einem der Ansprüche 1 bis 4, **dadurch gekennzeichnet, dass** das durch zwei Versteifungsrippen (2) gebildete Profil mit V-förmiger Querschnittsfläche durch Extrusion gebildet ist.

6. Tank nach einem der Ansprüche 1 bis 5, **dadurch gekennzeichnet, dass** das durch zwei Versteifungsrippen (2) gebildete Profil mit V-förmiger Querschnittsfläche gebildet wird, indem ein streifenförmiger Kunststoffflachteil, dessen Stärke durch eine zumindest etwa in der Mitte seiner Querschnittsfläche in Längsrichtung verlaufende Nut lokal geschwächt ist, in der Querschnittsfläche an diesem geschwächten Bereich (13) gebogen wird.

7. Tank nach einem der Ansprüche 1 bis 6, **dadurch gekennzeichnet, dass** die Mantelfläche (1) des Tanks an den Berührungsflächen mit den Versteifungsrippen (2) mit einer Nut (5) versehen ist, an deren Flanken die Versteifungsrippen (2) anliegen.

8. Tank nach einem der Ansprüche 1 bis 7, **dadurch gekennzeichnet, dass** er aus mehreren miteinander verbundenen, ebenen flächigen Teilen aus Kunststoff gebildet ist.

## Claims

1. A tank (1) whose casing wall at least partially comprises flat surfaces which at their inside are provided with horizontally extending reinforcing ribs (2), wherein the reinforcing ribs (2) are combined together in paired relationship to constitute a profile with a V-shaped cross-sectional area and are connected together, wherein the free ends of the limbs of the V-shaped cross-sectional area bear against the enclosing wall of the tank and are connected thereto, wherein the surfaces of the reinforcing ribs (2) have a plurality of openings provided for the tank contents to pass therethrough, and wherein the openings are spaced vertically in mutually superposed relationship.

2. A tank according to claim 1 **characterised in that** the reinforcing ribs (2) are welded to the inside of the casing surface (1) of the tank.

3. A tank according to claim 1 or claim 2 **characterised in that** the reinforcing ribs (2) which follow each other at the corners of the casing surface are in mitred relationship with each other and are welded to each other.

4. A tank according to one of claims 1 to 3 **characterised in that** two reinforcing ribs (2) are combined together to constitute a profile with a V-shaped cross-sectional area and are connected together by a weld seam (3).

5. A tank according to one of claims 1 to 4 **characterised in that** the profile with a V-shaped cross-sectional area formed by two reinforcing ribs (2) is formed by extrusion.

6. A tank according to one of claims 1 to 5 **characterised in that** the profile with a V-shaped cross-sectional area formed by two reinforcing ribs (2) is formed by a strip-shaped flat plastic portion whose thickness is locally weakened by a groove extending at least approximately in the centre of its cross-sectional area in the longitudinal direction being bent in the cross-sectional area at said weakened region (13).

7. A tank according to one of claims 1 to 6 **characterised in that** the casing surface (1) of the tank is provided at the contact surfaces with the reinforcing ribs (2) with a groove (5), against the flanks of which the reinforcing ribs (2) bear.

8. A tank according to one of claims 1 to 7 **characterised in that** it is formed from a plurality of interconnected flat areal portions of plastic material.

## Revendications

1. Réservoir, dont la surface d'enceinte (1) est au moins partiellement formée de surfaces planes pourvues de nervures de renforcement (2) s'étendant horizontalement sur leur face intérieure, lesdites nervures de renforcement (2) étant groupées par paires et raccordées entre elles pour former des profilés à section en V, les extrémités libres des côtés de la section en V reposant contre la paroi périphérique du réservoir et étant raccordées à celle-ci, les surfaces des nervures de renforcement (2) présentant une pluralité d'ouvertures prévues pour le passage du contenu du réservoir, et les ouvertures étant superposées verticalement à distance les unes des autres.

2. Réservoir selon la revendication 1, **caractérisé en ce que** les nervures de renforcement (2) sont soudées sur la face intérieure de la surface d'enceinte (1).

3. Réservoir selon la revendication 1 ou la revendication 2, **caractérisé en ce que** les nervures de renforcement (2) qui se succèdent dans les angles de la surface d'enceinte sont disposées en onglet et sont soudées entre elles.

4. Réservoir selon l'une des revendications 1 à 3, **caractérisé en ce que** deux nervures de renforcement (2) sont assemblées pour former un profilé à section en V, et raccordées entre elles par un cordon de soudure (3).

5. Réservoir selon l'une des revendications 1 à 4, **caractérisé en ce que** le profilé à section en V formé par deux nervures de renforcement (2) est obtenu par extrusion.

6. Réservoir selon l'une des revendications 1 à 5, **caractérisé en ce que** le profilé à section en V formé par deux nervures de renforcement (2) est obtenu en pliant au niveau de sa zone d'amincissement (13) une pièce plate en matière plastique dont l'épaisseur est localement réduite par une rainure s'étendant dans le sens de la longueur au moins sensiblement au milieu de sa section.

7. Réservoir selon l'une des revendications 1 à 6, **caractérisé en ce que** la surface d'enceinte (1) du réservoir est pourvue d'une rainure (5) sur ses surfaces de contact avec les nervures de renforcement (2), sur les flancs de laquelle reposent les nervures de renforcement (2).

8. Réservoir selon l'une des revendications 1 à 7, **caractérisé en ce qu'**il est formé de plusieurs pièces plates planes en matière plastique raccordées entre elles.
